# EUROPEAN PATENT APPLICATION

(11) **EP 3 249 217 A1**
(43) Date of publication of application: **29.11.2017**
(21) Application number: 17171679.8
(22) Date of filing: 18.05.2017
(51) Int. Cl.: F03D 7/02, F03D 7/04

(54) **METHOD OF IDENTIFYING A WIND DISTRIBUTION PATTERN OVER THE ROTOR PLANE AND A WIND TURBINE THEREOF**

(30) Priority: 23.05.2016 CN 201610345279
(71) Applicant: Envision Energy (Jiangsu) Co., Ltd., Jiangyin 214443 (CN)
(72) Inventor: Tong, Lei, Pudong District, Shanghai 200120 (CN); Chen, Lin, Pudong District, Shanghai 200120 (CN); Wang, Peng, Changning District, Shanghai 200000 (CN); Pedersen, Keld Stefan, 7100 Vejle (DK)
(74) Representative: Nielsen, Leif

(57) **Abstract**

The invention relates to a method of identifying a wind distribution pattern over a rotor plane and a wind turbine thereof. At least one operating parameter of the wind turbine and a rotational position of the rotor are measured over a time period. A first wind turbine blade passing signal is extracted from the measured operating parameter and a second wind turbine blade passing signal is generated from the rotational position. The first and second wind turbine blade passing signals are then analysed to determine the characteristics of the actual wind turbine blade passing signal in the rotor plane. These characteristics are afterwards compared to the characteristics of a plurality of known wind distribution patterns, and a unique relationship between the characteristics of the wind turbine blade passing signal and the wind distribution pattern is used to identify a distinctive wind distribution pattern.

## Description

### Field of the Invention

The present invention relates to a method of identifying a wind distribution pattern over the rotor plane of a wind turbine and a wind turbine thereof. The method comprises measuring at least one operating parameter of the wind turbine, extracting a wind turbine blade passing signal from the measured operating parameters, and using a unique relationship between characteristics of the wind turbine blade passing signal and a number of predetermined wind distributions to determine the wind distribution pattern over the rotor plane.

### Background of the Invention

It is known that wind farms can be installed at locations having a flat and plain terrain where the wind is able to pass more or less freely over the terrain turbines. The wind turbines are thus subjected to a substantially undisturbed wind profile over the rotor plane. It is also known that wind farms, due to various practical reasons, can be installed at locations having a complicated or very rough terrain, such as mountainous sites. Wind turbines installed at such sites tend to be subjected to unusual and harmful wind distributions over the rotor plane, such as extreme shears or reversed shears. This results in unexpected aerodynamic imbalances over the rotor and, thus, accelerated accumulation of fatigue loads, which in turn leads to an increased risk of extreme loads and unexpected accidents, and also reduced operating life time for the wind turbine. One way to solve these problems is to provide a wind turbine control system having a load protection algorithm, thereby allowing the wind turbine to reduce loads in critical situations, e.g. in the event of extreme loads. However, this load protective mode affects the total power production of the wind turbine.

WO 2013/182204 A1 discloses a control method for minimising asymmetrical load moments acting on the rotor where sensors directly or indirectly measure the mechanical loads. The measured signals are processed to determine a tilt moment and a yaw moment which are then analysed to determine a 3P-component thereof. This 3P-component and a reference value are used to calculate an error value which, in turn, is used to determine a 2P-cyclic pitch value for each wind turbine blade. The individual pitch angles of the respective wind turbine blades are then adjusted using this 2P-cyclic pitch value in order to compensate for the asymmetrical load moments. This control system fails to disclose or suggest how to identify and recognise wind distribution patterns over the rotor plane.

WO 2010/016764 A1 discloses alternative solution for minimising the asymmetrical load moments, wherein the bending moment of the rotor shaft is determined based on the sensor signals. Suitable corrective pitch values for each wind turbine blade are then calculated based on the bending moment components using an inverse trigonometric relationship between the deflection moment of the wind turbine blade and the bending moment of the rotor axis. The individual pitch angles are then adjusted according to these corrective pitch values. This control system also fails to disclose or suggest how to identify and recognise wind distribution patterns over the rotor plane.

EP 2025929 B1 discloses a predictive control method where the wind speed, wind shear, and wind turbulence in front of the rotor plane are measured by means of a LIDAR system. The measured wind data is converted into predicted aerodynamic load signals and then compared with measured load signals of suitable sensors located in the wind turbine. The difference is then used to calculate a corrective pitch value which, in turn, is applied to each respective wind turbine blade in order to reduce the asymmetrical loads in advance and thus maintain a uniform load on the rotor. This control scheme requires a complex measurement of the wind profile at a distance from the rotor, however, this wind profile may change before reaching the rotor and thus changing the aerodynamic loads. Secondly, such a hub mounted LIDAR system adds to total costs of the wind turbine. Thirdly, it is not hinted in EP 2025929 B1 that the measured wind profile or load signals can be used to identify and recognise wind distribution patterns over the rotor plane.

WO 2015/192856 A1 discloses a control method where integrated strain gauges or fibre optical sensors measure the mechanical loads on the rotor. A tilt moment and a yaw moment of the main bearing are calculated based on the load signal from the sensors. The tilt and yaw moments and the measured wind speed are used to estimate a horizontal and a vertical wind shear over the rotor plane. The horizontal and vertical wind shears are then used to estimate a wind velocity value which, in turn, is used to calculate an optimal tip speed ratio and an optimal pitch angle. This optimal tip speed ratio and optimal pitch angle are then applied to the respective wind turbine blades. In this control scheme, it is stated that the power production is optimised and the costs of energy of the wind turbine is reduced by adjusting the rotational speed and pitch angle of the wind turbine blades. It is further stated that this solution is only suitable for high wind shear conditions. It is not hinted that the estimated wind shears are used to identify and recognise different wind distribution patterns over the rotor plane, nor that they are stored for later root cause analysis.

EP 2317327 by SSB Wind systems discloses a wind turbine with a system for determining a wind distribution pattern over the rotor plane. The parameter can be the bending moment of the rotor. By also knowing the rotational position of the rotor, the measure signal may be indicative of the wind distribution pattern. The teaching is to search a table containing a plurality of predetermined wind distribution patterns and to compare with the measured signal. The table values are used for identifying the wind distribution pattern. The wind turbine control system has means for controlling the wind turbine on the basis of the wind distribution pattern measured.

Direct measurement of the wind distribution over the rotor plane is very difficult to achieve and is thus often not available to the wind turbine operator. Therefore, there exists a need for a method of identifying the wind distribution over the rotor plane under ambient conditions which allows for root cause analysis as well as protective control of the wind turbine.

### Object of the Invention

An object of this invention is to provide a method of recognising and identifying the wind distribution pattern over the rotor plane.

Another object of this invention is to provide a method of determining the wind distribution over the rotor plane.

Yet another object of this invention is to provide a method that allows for later root cause analysis based on measured wind distribution conditions.

A further object of this invention is to provide a wind turbine with a control system that allows for the reduction of extreme loads in the wind turbine.

### Description of the Invention

An object of the invention is achieved by a method of identifying a wind distribution pattern over a rotor plane of a wind turbine, the wind turbine comprising a rotor which is rotary arranged relative to a nacelle, the nacelle is arranged on top of a wind turbine tower, the rotor comprises at least two wind turbine blades mounted to a rotatable hub, wherein the at least two wind turbine blades define the rotor plane, the wind turbine further comprising an angular sensor configured to measure a rotational position, at least a second sensor configured to measure at least one operating parameter, and a control system electrically connected to the angular sensor and the at least second sensor, wherein the method comprises the steps of:
- measuring at least one operating parameter,
- measuring a rotational position of the rotor,
- determining a wind distribution over the rotor plane, e.g. in at least a horizontal direction or a vertical direction,
characterised in that, the method further comprises the steps of:
- comparing said wind distribution to a plurality of predetermined wind distribution patterns, and identifying a match between the wind distribution and one of said plurality of predetermined wind distribution patterns.

This provides a simple and easy method of identifying a wind distribution pattern over the rotor, such as the prevailing wind distribution pattern, the most frequently occurring wind distribution pattern, or other relevant wind distribution patterns. This method may also be used to identify changes in the wind distribution patterns. The present method eliminates the need for a hub mounted LIDAR system, since the method may use the already existing sensor signals found in the wind turbine. The present method also allows for an improved protective action or improved root cause analysis. The present method can suitable be used for any type of variable speed wind turbines. Furthermore, the present method can suitable be used in a remote or local control system wherein the present method can be implemented as a control algorithm in the remote control system or in the local control system. The control system may be a remote or local control system configured to control the operation of the variable speed wind turbine. The method can suitably be used at all wind shear conditions, i.e. at low wind shears, at medium wind shears, as well as high wind shears.

The rotational position is measured as the angular position of the wind turbine blades in the rotor plane relative to a reference angle, e.g. a vertical position where the tip end of the wind turbine blade faces away from the wind turbine tower. The rotational speed of the rotor also defines a rotational frequency, i.e. 1P frequency, of the rotor.

The rotational frequency may be used to calculate a passing frequency of the wind turbine blades, e.g. the 2P or 3P frequency, by multiplying the rotational frequency with the number, e.g. two, three, or more, of wind turbine blades. This wind turbine blade passing frequency may be used to determine the actual phase of the wind turbine blade passing signal in the rotor plane as described later.

According to one embodiment, said step of determining a wind distribution over the rotor plane comprises:
- determining at least one wind turbine blade passing signal based on said at least one operating parameter or said rotational position,
- calculating the characteristics, e.g. an amplitude or a phase, of said one wind turbine blade passing signal.

The operating parameter, the rotational speed, or another suitable signal may be used to determine the characteristics of the wind turbine blade passing signal in the rotor plane. The characteristics may be defined by the amplitude and at least the phase of the actual wind turbine blade passing signal. In example, the operating parameter and/or the rotational position may be suitably processed, e.g. filtered and/or amplified, to determine the actual wind turbine blade passing signal. This signal may then be suitably analysed, e.g. in the time and/or frequency domain, to determine the characteristics, e.g. the phase and/or the amplitude. This eliminates the need for additional sensors or sensor units, since the wind turbine blade passing signal can be determined by using the signal of the sensors already situated in the wind turbine. This also reduces the total costs of implementing the present method in existing wind turbines or in new wind turbines.

In example, the operating parameter may be analysed to determine at least the amplitude of the actual wind turbine blade passing signal. In example, the rotational position may be analysed to determine the phase of the actual wind turbine blade passing signal.

According to a special embodiment, each of the predetermined wind distribution patterns is defined by a unique relationship between said each wind distribution pattern and predetermined characteristics of the wind turbine blade passing signal, wherein said step of comparing said wind distribution to a plurality of predetermined wind distribution patterns comprises comparing the calculated characteristic to said predetermined characteristics.

Conventional control methods use the measured load signals, e.g. the 3P loads, to directly determine a corrective pitch angle or tip speed ratio used to perform a cyclic pitching of the wind turbine blades. No further analysis of the measured load signals is performed in order to identify different wind distribution patterns over the rotor plane.

In example, a unique relationship may be established between a distinctive wind distribution pattern and distinctive characteristics of the wind turbine blade passing signal. This unique relationship may be established using simulations, wind shear models, previous wind distribution measurements, or other suitable means. Each wind distribution pattern is defined by a set of horizontal and vertical wind shear values representing the x-axis and z-axis in the rotor plane. The y-axis is defined by the rotation axis of the rotor shaft. A first set of distinctive wind distribution patterns may be established for a clockwise rotation of the rotor. A second set of distinctive wind distribution patterns may be established for an anti-clockwise rotation of the rotor. This unique relationship allows the control system to determine a current wind distribution pattern over the rotor plane.

In example, the unique relationship may further be used to recognise and identify different wind distribution patterns over the rotor plane. The current wind distribution pattern may be compared to at least one set of known wind distribution patterns, e.g. the first or second set mentioned above in order to establish a match or at least a substantial match. This match or substantial match between the current wind distribution pattern and a distinctive wind distribution pattern may be achieved by performing a weighted evaluation of the current wind shear values relative to the stored wind shear values of the known wind distribution patterns. The weighted evaluation may optionally generate a relative value indicative of the likelihood of a match. If this relative value exceeds a predetermined threshold, then a match is established. This identified wind distribution pattern can advantageously be used to determine a suitable protective action as described above or improve the root cause analysis if a failure or damage is detected, e.g. due to extreme or unexpected loads acting on the rotor.

Alternatively, the currently calculated characteristics of the wind turbine blade passing signal may be compared to the individual characteristics of the known wind distribution patterns in order to establish a match or at least a substantial match. This match or substantial match may be established in the same manner as described above or by using a different technique.

Optionally, the current wind distribution pattern may be determined by applying a wind shear transfer function to the wind turbine blade passing signal, e.g. to the calculated amplitude and/or phase.

According to one embodiment, at least the at least one operating parameter or the rotational position of the rotor is measured over a predetermined time period.

The operating parameter, the rotational speed, and said another suitable signal may be measured over a predetermined time period. The time period may suitably be selected dependent of the particular configuration of the wind turbine and/or the particular application (load reduction control or root cause analysis) of the present method. In example, but not limited to, the respective signals may be measured over a relative short time period, e.g. up to 10 minutes, e.g. between 1 minute and 5 minutes. In example, but not limited to, the respective signals may be measured over a relatively long time period, e.g. up to 5 hours, e.g. between 5 minutes and 2 hours. The measured signal or signals may then be suitably processed, e.g. using statistical analysis, to generate the wind turbine blade passing signal. This provides a more accurate measurement of the wind distribution and reduces the influence of sudden wind gusts.

According to one embodiment, the method further comprises the step of updating the predetermined wind distribution patterns.

The stored wind distribution patterns, e.g. the distinctive characteristics thereof, may be updated, including adding new wind distribution patterns, deleting old wind distribution patterns, or updating existing wind distribution patterns. This may be achieved by applying a machine learning algorithm to the current wind distribution pattern or the characteristics thereof, or by automatically or manually updating the stored wind distribution patterns using an internal or external database. Any suitable machine learning algorithm may be used to update the known wind distribution patterns. This allows for a more accurate recognition of distinctive wind distribution patterns. This also allows the wind distribution patterns to be adapted to the specific location of the wind turbine. This, in turn, may provide a more accurate load reduction control or root cause analysis.

The wind distribution patterns may be updated after each run of the present process, or when it is deemed necessary. Alternatively, the wind distribution patterns may be updated upon request, e.g. from a remote operator or external service provider.

According to one embodiment, said step of identifying a match between the wind distribution and one of said plurality of predetermined wind distribution patterns comprises applying a pattern recognition algorithm to the calculated characteristics of the wind turbine blade passing signal.

The identification of wind distribution patterns may comprise applying a pattern recognition algorithm to the wind turbine blade passing signal, e.g. the calculated amplitude and/or phase. Any suitable pattern recognition algorithm may be used to identify a distinctive wind distribution pattern. The pattern recognition algorithm may use one or more parameters or classes to determine a match or a substantial match. In example, the pattern recognition algorithm may determine a distribution or averaged value of the calculated amplitude and/or phase over the measured time period. This distribution or averaged value may then be used to identify a distinctive wind distribution pattern.

These parameters or classes may further be updated, as mentioned above, to improve the values of the current wind distribution pattern and/or to improve the recognition of a distinctive wind distribution pattern.

According to one embodiment, said step of calculating the characteristics of said one wind turbine blade passing signal comprises calculating an amplitude and a phase, the amplitude and the phase being indicative of the wind turbine blade passing signal of the rotor plane.

As mentioned earlier, the operating parameter, the rotational speed, or said another suitable signals may be used to determine the amplitude and the phase of the actual wind turbine blade passing signal in the rotor plane. In example, a filter algorithm may be applied to the operating sensor signal, i.e. the measured operating parameter, for extracting a first wind turbine blade passing signal. The filter algorithm may in example, but not limited to, be a notch filter or a Kalman filter. This extracted signal may then be transferred into the frequency domain, e.g. by applying a frequency transfer function. The frequency transfer function may in example, but not limited to, be a fast Fourier transform (FFT) algorithm. This frequency transformed signal may be analysed to determine the amplitude, e.g. the relative amplitude, of the actual wind turbine blade passing signal.

In example, a second wind turbine blade passing signal may be generated by multiplying the angular sensor signal, i.e. the measured rotational position, with the number of wind turbine blades. This generated signal may then be analysed in the time domain, e.g. by applying integral function, to determine a phase error relative to the first wind turbine blade passing signal. The integral function may in example, but not limited to, be a correlation analysis algorithm or a Hilbert transformation algorithm. The correlation analysis algorithm may be an auto-correlation algorithm or a cross-correlation algorithm. This phase error may then be used to determine the phase of the actual wind turbine blade passing signal.

According to one embodiment, said at least one operating parameter is selected from a generator torque signal, a generator speed signal, a rotor torque signal, a vibration signal, or a blade bending moment signal.

The operating parameter may be measured using various sensors capable of measuring an operating parameter of the wind turbine. The operating parameter may in example be a generator torque signal, a generator or rotor speed signal, a rotor torque signal, a vibration signal, a blade bending moment signal, or another suitable operating signal. The vibration signal may be measured in a fixed frame of reference, e.g. defined by the wind turbine tower, and along the x-axis and/or y-axis. The blade bending moment signal may be measured directly, or be measured as a load signal which, in turn, is used to calculate the blade bending moment. This allows the already available sensor signals to be used as input for this present method.

According to one embodiment, said method further comprises at least the step of:
- operating the wind turbine in a load protective mode, wherein the configuration of the wind turbine in said load protective mode is selected according to the identified wind distribution pattern, or
- storing the wind distribution in a database, e.g. transmitting said stored wind distribution to a remote control system or monitoring unit.

The present method can suitably be used for load reduction control, wherein the present method may be implemented in the control system of the wind turbine as a load protective algorithm. The method may be configured to perform such load reduction control in real time, at regular time intervals, or upon detecting certain events, e.g. detecting extreme loads. The wind turbine may be operated in a normal operation mode, i.e. producing a maximum or nominal power output, or in at least one load protective mode, i.e. reducing loads on the wind turbine. In the load protective mode, a protective action may be applied in the event that certain loads and/or wind conditions are detected. This allows the aerodynamic or fatigue loads acting on the wind turbine to be reduced.

The protective action may be applied to the wind turbine by adjusting one or more of the control signals used to operate the wind turbine so that these loads are reduced. The control signals may in example, but not limited to, be a generator torque control signal, a power output control signal, a rotor speed control signal, a pitch angle control signal, or another suitable control signal. The protective action may be selected according to the identified wind distribution pattern. In example, a first protective action may be applied when identifying a first wind distribution pattern, a second protective action may be applied when identifying a second wind distribution pattern, and so on. This allows the protective action to be adapted in accordance with the current wind distribution pattern.

Alternatively, the wind distribution patterns may be linked to individual protective actions where each individual protective action is defined by a set of control signals. Each set of control signals may be optimised according to that particular wind distribution pattern and/or the particular configuration of the wind turbine in order to an optimal load reduction control. These sets of control signals may be stored in the control system and used to operate the wind turbine in the load protective mode.

The present method may also be used to perform a root cause analysis (RCA) when detecting a failure or damage in or on a component of the wind turbine. The operating parameter, the rotational position and/or speed, the wind distribution patterns, and other data may be stored in a database. These stored data may then be analysed at a later time, e.g. using models, estimations, correlations, or other techniques, in order to identify the reason of the failure or damage. The identification of distinctive wind distribution patterns provides an improved basis for performing the RCA and thus allows for a more accurate identification of the reason for the failure or damage. The stored data may alternatively be transmitted to a remote wind turbine control system or a remote monitoring unit. This allows the wind turbine operator to monitor the performance of the wind turbine, or compare the stored data with data collected from other wind turbines located in that area.

An object of the invention is also achieved by a wind turbine comprising:
- a rotor rotary arranged relative to a nacelle, the rotor comprises at least two wind turbine blades mounted to a rotatable hub, wherein the at least two wind turbine blades define a rotor plane,
- the nacelle being arranged on top of a wind turbine tower,
- an angular sensor configured to measure a rotational position of the rotor,
- at least a second sensor configured to measure at least one operating parameter of the wind turbine,
- a control system electrically connected to the angular sensor and the at least second sensor, characterised in that, the control system is configured to determine a wind distribution over the rotor plane, e.g. in at least a horizontal direction or a vertical direction, wherein the control system is further configured to compare said wind distribution to a plurality of predetermined wind distribution patterns and to identify a match between the wind distribution and one of said plurality of predetermined wind distribution patterns.

This provides a wind turbine capable of identifying the wind distribution pattern acting on the rotor plane and optionally any changes in the wind distribution pattern. This is particularly relevant for wind turbines installed in complicated or very rough terrains, such as mountainous sites. The wind turbine may be any type of a variable speed wind turbine. This allows for an improved load protective control as well as an improved RCA in the event of a failure or a detected damage. The present invention may be integrated into new wind turbines or retrofitted into existing wind turbines.

The rotational position is measured by at least one angular sensor, e.g. a rotary encoder. The angular sensor may include a calibration method or receive a calibration signal for compensating any drifts in the measured angular signal. The operating parameter is measured by at least one operating sensor. The operating sensor may in example be a torque sensor, a speed sensor, a power sensor, a pitch angular sensor, a vibration sensor, a load sensor, or another suitable sensor. The vibration sensor, e.g. an accelerometer, may be configured to measure the vibrations in at least one direction, e.g. along the x-axis and/or the y-axis. The load sensor, e.g. strain gauges, may be configured to be arranged relative to a component of the wind turbine, e.g. the wind turbine blade or the rotor shaft. The control system may comprise an optional database and a microprocessor, a programmable logic controller (PLC), or another suitable controller. The control system is electrically connected to the respective sensors and other electrical components of the wind turbine.

According to one embodiment, said control system is configured to determine at least one wind turbine blade passing signal from said at least one operating parameter or said rotational position, and to calculate the characteristics, e.g. at least an amplitude or a phase, of said one wind turbine blade passing signal.

The control system may be configured to extract a first wind turbine blade passing signal from the measured operating parameter, and to generate a second wind turbine passing signal from the measured rotational position. The control system may further be configured to determine the characteristics of the actual wind turbine blade passing signal in the rotor plane based on these two wind turbine blade passing signals as described earlier. The control system may additionally be configured to compare the current characteristics to the characteristics of a plurality of known wind distribution patterns in order to identify a match. This enables the control system to recognise and identify a distinctive wind distribution pattern over the rotor plane. This wind distribution pattern may be used in a load protective mode or in a RCA. The use of wind turbine blade passing signals to identify wind distribution patterns allows for a simple and easy implementation of this method into a control system.

According to a special embodiment, each of the predetermined wind distribution patterns is defined by a unique relationship between said each wind distribution pattern and predetermined characteristics of the wind turbine blade passing signal, wherein the control system is configured to compare the calculated characteristic to said predetermined characteristics for identifying the match.

A unique relationship between the wind distribution pattern and the characteristics of the wind turbine blade passing signal may be used to identify a current wind distribution pattern or any distinctive wind distribution patterns as described earlier. A plurality of known wind distribution patterns may be stored in a database connected to a controller. This database may be updated by a machine learning algorithm in the controller or via an external or internal database.

The control system may be configured to store the characteristics of the actual wind turbine blade passing signal and/or the current wind distribution pattern in the database or in another database. The controller may be configured to control the communication with a remote control system or monitoring unit, and to transmit the stored data to this remote control system or monitoring unit.

According to one embodiment, said control system is configured to operate the wind turbine in a normal operation mode and in at least one load protective mode, wherein the control system in the at least one load protective mode is configured to apply a protective action to the wind turbine based on the identified wind distribution pattern.

The control system may be configured to operate a wind turbine in a load protective mode when detecting certain events, such as extreme loads or extreme wind shears. In this load protective mode, the controller may initiate a protective action by adjusting one or more of the control signals used to control the operation of the wind turbine in a normal operation mode. The protective action may in example, but not limited to, be shutting the wind turbine down, derating the performance of the wind turbine, performing an individual pitch control of the wind turbine blades, or another suitable protective action. When the control system detects that the event is no longer present, then the control system may operate the wind turbine in the normal operation mode.

The control system may alternatively be configured to select the required protective action based on the identified wind distribution pattern. This allows the control signals used to operate the wind turbine to be optimised according to each distinctive wind distribution pattern. The optimised values of these control signals may further be stored in the database where the control system may transmit these optimised control signals to the respective operating unit in the wind turbine. This allows for an improved load reduction control and, optionally, a reduced loss of power production when operating in the load protective mode.

The invention is not limited to the embodiments described herein, and thus the described embodiments can be combined in any manner without deviating from the objects of the invention.

### Description of the Drawing

The invention is described by example only and with reference to the drawings, wherein:
- Fig. 1: shows an exemplary embodiment of a wind turbine,
- Fig. 2: shows an exemplary graph of the measured operating parameter,
- Fig. 3: shows a first wind turbine blade passing signal extracted from the measured operating parameter,
- Fig. 4: shows an exemplary graph of the measured rotational position,
- Fig. 5: shows an exemplary graph of the phase error between the actual wind turbine blade passing signal, the rotational position, and a second wind turbine blade passing signal, and
- Fig. 6a-c: show the unique relationships between the characteristics of the wind turbine blade passing signal and three distinctive wind distribution patterns.

In the following text, the figures will be described one by one, and the different parts and positions seen in the figures will be numbered with the same numbers in the different figures. Not all parts and positions indicated in a specific figure will necessarily be discussed together with that figure.

### Position number list

1. Wind turbine
2. Tower
3. Nacelle
4. Rotor
5. Hub
6. Wind turbine blades
7. Control system
8. Sensor units
9. Operating parameter
10. First wind turbine blade passing signal
11. Rotational position
12. Second wind turbine blade passing signal
13. Actual wind turbine blade passing signal
14. First wind distribution pattern
15. Second wind distribution pattern
16. Third wind distribution pattern

### Detailed Description of the Invention

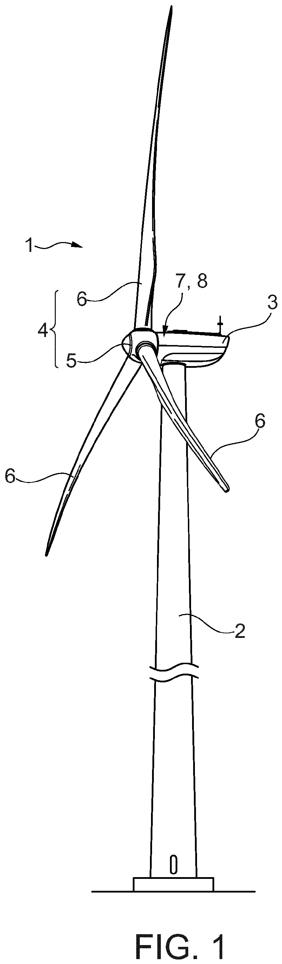

Fig. 1 shows an exemplary embodiment of a wind turbine 1 in the form of a variable speed wind turbine. The wind turbine 1 comprises a wind turbine tower 2 provided on a foundation. A nacelle 3 is arranged on top of the wind turbine tower 2 and configured to yaw relative to the wind turbine tower 2 via a yaw system (not shown). A rotor 4 comprising a hub 5 and at least two wind turbine blades 6 is rotatably arranged relative to the nacelle 3, wherein the wind turbine blades 6 are mounted to the hub 5. The wind turbine 1 is here shown with three wind turbine blades 6. The hub 5 is connected to a drive train arranged in the nacelle 3 via a drive shaft, wherein the drive train comprising at least a generator for producing an electrical power output.

The wind turbine 1 further comprises a control system 7 in the form of a local control system connected to a plurality of sensor units 8. The control system 7 is configured to operate the wind turbine 1 in a normal operation mode and in at least one load protective mode. The sensor units 8 include an angular sensor configured to measure a rotational position of the rotor 4 and at least an operating sensor configured to measure an operating parameter of the wind turbine 1.

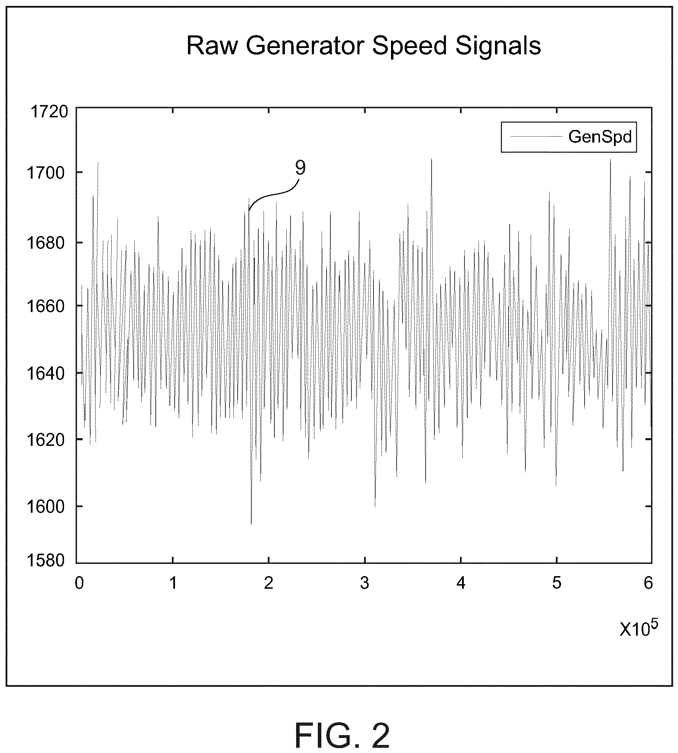

Fig. 2 shows an exemplary graph of the measured operating parameter 9 of a clockwise rotating rotor 4. The operating parameter is here measured as a generator speed signal using a suitable generator speed sensor. The x-axis indicates the measured time in milliseconds [ms] while the y-axis indicates the measured number of revolutions of the generator in rounds per minute [rpm].

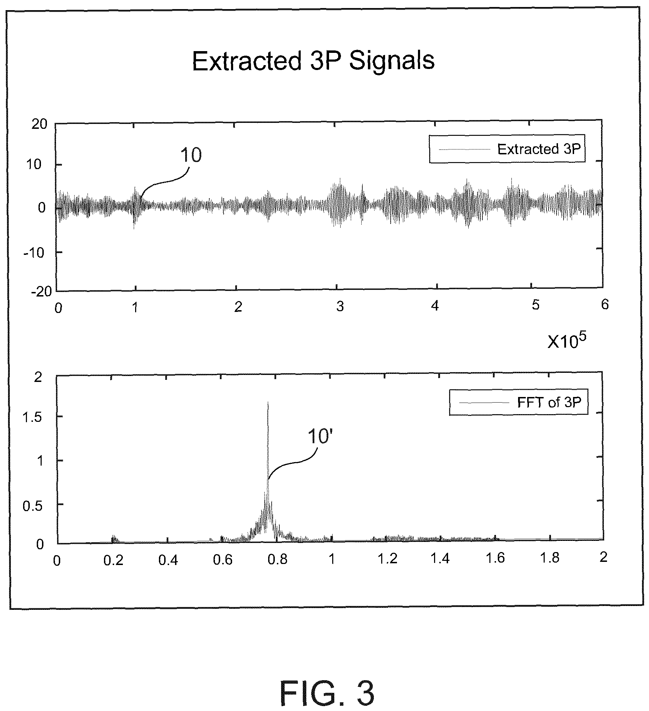

Fig. 3 shows a first wind turbine blade passing signal 10, 10' extracted from the measured operating parameter 9. The wind turbine blade passing signal is here measured as a 3P signal of the wind turbine 1 and is processed in the time and frequency domains respectively. The x-axis indicates the measured time in milliseconds [ms] and in hertz [Hz] respectively while the y-axis indicates the relative amplitude of the signal. The amplitude is here shown in [rpm], but can also be measured in radians per second [^{rad}/ₛ].

The first wind turbine blade passing signal is here extracted by having applied a Kalman filter algorithm to the operating sensor signal, i.e. the measured operating parameter 9. This extracted signal 10 is further transformed into the frequency domain by applying a FFT-algorithm. This frequency transformed signal 10' is then analysed to determine the relative amplitude of the actual wind turbine blade passing signal.

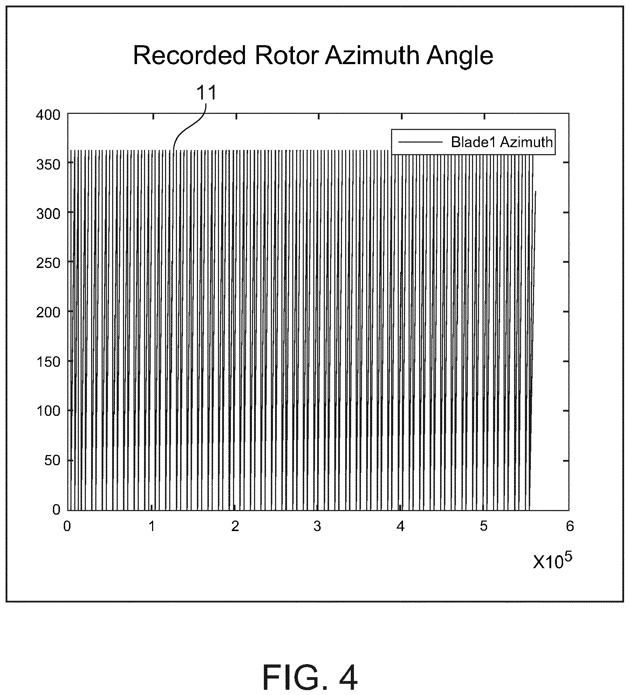

Fig. 4 shows an exemplary graph of the measured rotational position 11. The rotational position is here measured as an angular signal using a suitable angular sensor. The x-axis indicates the measured time in milliseconds [ms] while the y-axis indicates the angular position of the rotor 4 in degrees. The measured angular positions are here shown in multiples of 360 degrees, i.e. the angular position is rest to zero each time the angular position passes 360 degrees.

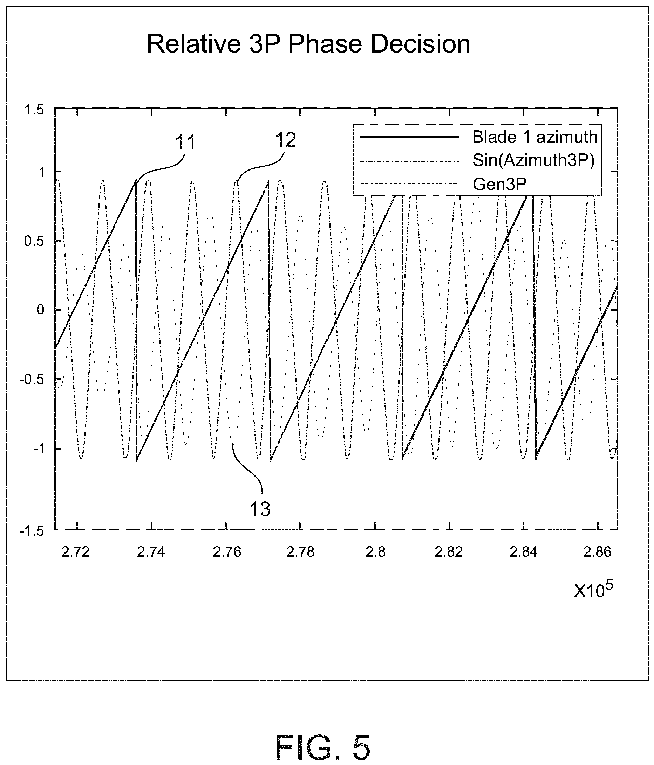

Fig. 5 shows an exemplary graph of the phase error between the actual wind turbine blade passing signal, the rotational position 11 and a second wind turbine blade passing signal 12. The x-axis indicates the measured time in milliseconds [ms] while the y-axis indicates the relative angular position of the rotor 4 in degrees.

The rotation speed 11 signal is here processed in the time domain by multiplying it with the number of wind turbine blades 6 to generate the second wind turbine blade passing signal 12. This second wind turbine blade passing signal 12 is then analysed using a Hilbert transformation algorithm to determine a phase error in relation to the first wind turbine blade passing signal 10. This phase error is then used to determine the phase of the actual wind turbine blade passing signal 13.

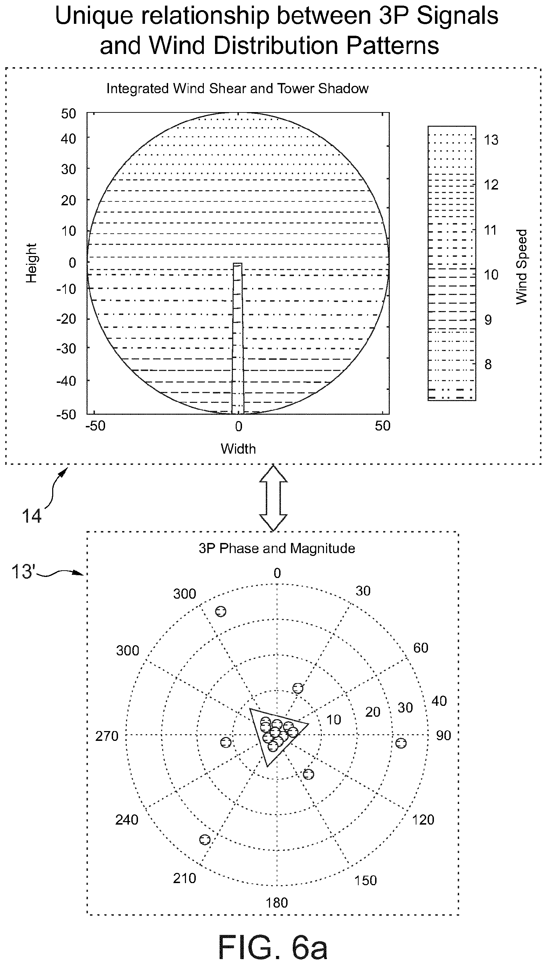

Fig. 6a-c show the unique relationships between the characteristics of the actual wind turbine blade passing signal 13 and three distinctive wind distribution patterns 14, 15, 16. In the upper diagram, the x-axis indicates the width of the rotor plane defined by the rotor 4 in metres [m] while the y-axis indicates the height of this rotor plane in metres [m]. The reference point {0m, 0m} indicates the rotational axis or y-axis of the wind turbine 1. The wind speed is here measured in metres per second [^{m}/ₛ]. In the lower diagram, the radius indicates the relative amplitude of the actual wind turbine blade passing signal 13 while the radial extending lines indicate the phase of the actual wind turbine blade passing signal 13.

Fig. 6a shows the unique relationship between a first distinctive wind distribution pattern 14 and the corresponding characteristics, e.g. the amplitude and phase, of the actual wind turbine blade passing signal 13'. The first distinctive wind distribution pattern 14 is here shown as vertical wind shears extending in an upwards direction, i.e. parallel to the longitudinal direction of the wind turbine tower 2 and with the highest wind speeds at the uppermost part of the rotor plane.

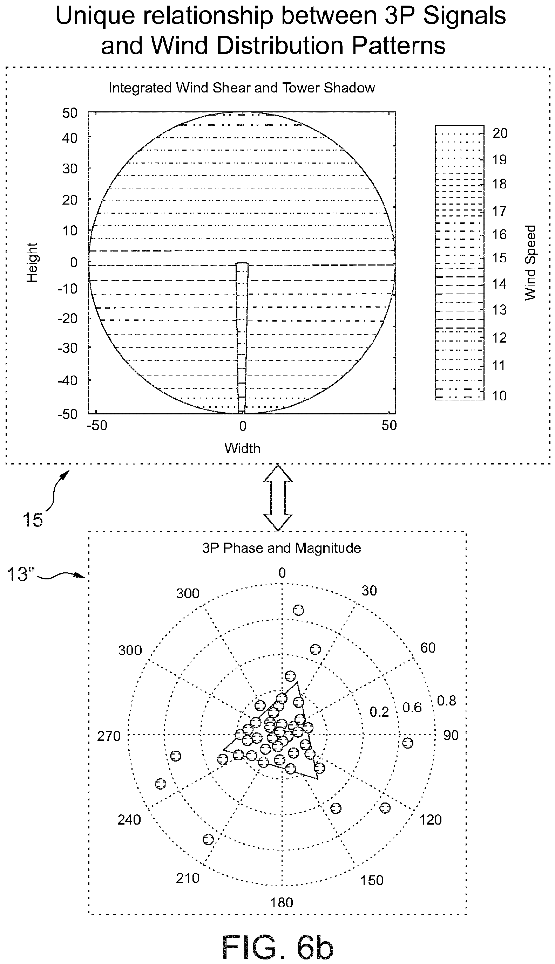

Fig. 6b shows the unique relationship between a second distinctive wind distribution pattern 15 and the corresponding characteristics, e.g. the amplitude and phase, of the actual wind turbine blade passing signal 13". The second distinctive wind distribution pattern 15 is here shown as vertical wind shears in opposite direction, i.e. parallel to the longitudinal direction of the wind turbine tower 2 and with the highest wind speeds at the lowermost part of the rotor plane.

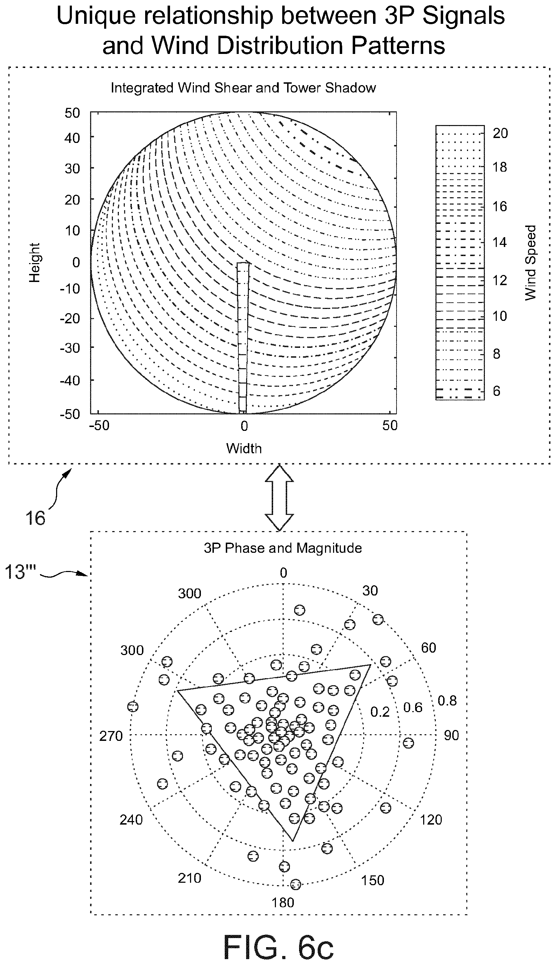

Fig. 6c shows the unique relationship between a third distinctive wind distribution pattern 16 and the corresponding characteristics, e.g. the amplitude and phase, of the actual wind turbine blade passing signal 13"'. The third distinctive wind distribution pattern 16 is here shown as a combination of horizontal wind shears, i.e. perpendicular to the longitudinal direction of the wind turbine tower 2, and vertical wind shears, e.g. with the highest wind speeds at the lower-left part of the rotor plane.

When the characteristics of the actual wind turbine blade passing signal 13 are determined, they are then compared to a plurality of stored distinctive wind distribution patterns stored in a database in order to identify a match. Each distinctive wind distribution pattern is defined by distinctive characteristics of the actual wind turbine blade passing signal 13 as shown in fig. 6a, fig. 6b, and fig. 6c. This enables the control system 7 to identify and recognise the distinctive wind distribution patterns acting on the rotor plane by simply analysing the wind turbine blade passing signal generated in the wind turbine 1.

## Claims

1. A method of identifying a wind distribution pattern over a rotor plane of a wind turbine, the wind turbine comprising a rotor rotary arranged relative to a nacelle, the nacelle is arranged on top of a wind turbine tower, the rotor comprises at least two wind turbine blades mounted to a rotatable hub, wherein the at least two wind turbine blades define the rotor plane, the wind turbine further comprising an angular sensor configured to measure a rotational position, at least a second sensor configured to measure at least one operating parameter, and a control system electrically connected to the angular sensor and the at least second sensor, wherein the method comprises the steps of:
- measuring at least one operating parameter,
- measuring a rotational position of the rotor,
- determining a wind distribution over the rotor plane, e.g. in at least a horizontal direction or a vertical direction, by determining at least one wind turbine blade passing signal based on said at least one operating parameter or said rotational position and calculating the characteristics, e.g. an amplitude or a phase, of said one wind turbine blade passing signal,
- comparing said wind distribution to a plurality of predetermined wind distribution patterns, and
- identifying a match between the wind distribution and one of said plurality of predetermined wind distribution patterns by applying a pattern recognition algorithm to the calculated characteristics of the wind turbine blade passing signal.

2. A method according to claim 1, **characterised in that,** each of the predetermined wind distribution patterns is defined by a unique relationship between said each wind distribution pattern and predetermined characteristics of the wind turbine blade passing signal, wherein said step of comparing said wind distribution to a plurality of predetermined wind distribution patterns comprises comparing the calculated characteristic to said predetermined characteristics.

3. A method according to any one of claims 1 to 2, **characterised in that,** the at least one operating parameter or the rotational position of the rotor is measured over a predetermined time period.

4. A method according to any one of claims 1 to 3, **characterised in that,** the method further comprises the step of updating the predetermined wind distribution patterns.

5. A method according to any one of claims 1 to 4, **characterised in that,** said step of calculating the characteristics of said one wind turbine blade passing signal comprises calculating an amplitude and a phase, the amplitude and the phase being indicative of the wind turbine blade passing signal of the rotor plane.

6. A method according to any one of claims 1 to 5, **characterised in that,** said at least one operating parameter is selected from a generator torque signal, a rotor torque signal, a vibration signal, or a blade bending moment signal.

7. A method according to any one of claims 1 to 6, **characterised in that,** said method further comprises at least one step of:
- operating the wind turbine in a load protective mode, wherein the configuration of the wind turbine in said load protective mode is selected according to the identified wind distribution pattern, or
- storing the wind distribution in a database, e.g. transmitting said stored wind distribution to a remote control system or monitoring unit, or
- both.

8. A wind turbine comprising:
- a rotor rotary arranged relative to a nacelle, the rotor comprises at least two wind turbine blades mounted to a rotatable hub, wherein the at least two wind turbine blades define a rotor plane,
- the nacelle being arranged on top of a wind turbine tower,
- an angular sensor configured to measure a rotational position of the rotor,
- at least a second sensor configured to measure at least one operating parameter of the wind turbine,
a control system electrically connected to the angular sensor and the at least second sensor, **characterised in that,** the control system is configured to determine a wind distribution over the rotor plane, e.g. in at least a horizontal direction or a vertical direction, wherein the control system is configured to determine at least one wind turbine blade passing signal from said at least one operating parameter or said rotational position, and to calculate the characteristics, e.g. at least an amplitude or a phase, of said one wind turbine blade passing signal, and to compare said wind distribution to a plurality of predetermined wind distribution patterns and the control system being configured with a pattern recognition algorithm configured to apply the calculated characteristics of the wind turbine blade passing signal to identify a match between the wind distribution and one of said plurality of predetermined wind distribution patterns.

9. A wind turbine according to claim 8, **characterised in that,** each of the predetermined wind distribution patterns is defined by a unique relationship between said each wind distribution pattern and predetermined characteristics of the wind turbine blade passing signal, wherein the control system is configured to compare the calculated characteristic to said predetermined characteristics for identifying a match.

10. A wind turbine according to any one of claims 8 to 9, **characterised in that,** said control system is configured to operate the wind turbine in a normal operation mode and in at least one load protective mode, wherein the control system in the at least one load protective mode is configured to apply a protective action to the wind turbine based on the identified wind distribution pattern.
